(19) Europäisches Patentamt

European Patent Office

Office européen des brevets

(11) **EP 4 625 155 A2**

(12) **EUROPEAN PATENT APPLICATION**

(43) Date of publication:
**01.10.2025 Bulletin 2025/40**

(21) Application number: **25189908.4**

(22) Date of filing: **16.07.2025**

(51) International Patent Classification (IPC):
**G06F 9/30** *(2018.01)* **G06F 15/80** *(2006.01)*

(52) Cooperative Patent Classification (CPC):
**G06F 15/8053; G06F 9/30036**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.07.2024 CN 202410962546**

(71) Applicant: **Beijing Horizon Information
Technology Co., Ltd.
Beijing 100094 (CN)**

(72) Inventor: **DING, Jinnan
Beijing, 100094 (CN)**

(74) Representative: **Dehns Germany Partnerschaft
mbB
Theresienstraße 6-8
80333 München (DE)**

(54) **VECTOR DATA COMPUTING METHOD AND APPARATUS, ELECTRONIC DEVICE, AND STORAGE MEDIUM**

(57) Embodiments of this disclosure disclose a vector data computing method and apparatus, an electronic device, and a storage medium. The method includes: determining to-be-computed vector data and a corresponding first operation type; determining, based on the first operation type, a target vector operation array and a target operation data path corresponding to the target vector operation array from at least one preset vector operation unit, where the preset vector operation unit supports one or more operation data paths, and any of the one or more operation data paths corresponds to one computing function; and controlling the target vector operation array to compute the to-be-computed vector data through the target operation data path, to obtain a computation result corresponding to the to-be-computed vector data. According to the embodiments of this disclosure, richness and diversity of computing functions and computational efficiency can be improved.

FIG. 1

**Description**

**FIELD OF THE INVENTION**

This disclosure relates to computer technologies, and in particular, to a vector data computing method and apparatus, an electronic device, and a storage medium.

**BACKGROUND OF THE INVENTION**

With constant promotion of transformer network structures, vector computing has gradually become an important computing mode besides matrix computing. The vector computing has characteristics of numerous operator types and diverse functional combinations. In related technologies, vector computing is usually accelerated by using vector accelerator engines or general-purpose computing on graphics processing units (GPGPUs for short). However, conventional vector accelerator engines have limited functions and poor flexibility, and the general-purpose graphics processing units have lower computational efficiency.

**SUMMARY OF THE INVENTION**

Embodiments of this disclosure provide a vector data computing method and apparatus, an electronic device, and a storage medium, which can implement vector computing functions and improve computational efficiency.

According to a first aspect of this disclosure, a vector data computing method is provided, including: determining to-be-computed vector data and a corresponding first operation type; determining, based on the first operation type, a target vector operation array and a target operation data path corresponding to the target vector operation array from at least one preset vector operation unit, wherein the preset vector operation unit supports one or more operation data paths, and any of the one or more operation data paths corresponds to one computing function; and controlling the target vector operation array to compute the to-be-computed vector data through the target operation data path, to obtain a computation result corresponding to the to-be-computed vector data.

According to a second aspect of this disclosure, a vector data computing apparatus is provided, including: a first processing module, configured to determine to-be-computed vector data and a corresponding first operation type; a second processing module, configured to determine, based on the first operation type, a target vector operation array and a target operation data path corresponding to the target vector operation array from at least one preset vector operation unit, wherein the preset vector operation unit supports one or more operation data paths, and any of the one or more operation data paths corresponds to one computing function; and a third processing module, configured to control the target vector operation array to compute the to-be-computed vector data through the target operation data path, to obtain a computation result corresponding to the to-be-computed vector data.

According to a third aspect of this disclosure, a vector processor is provided, including: the vector data computing apparatus and the at least one preset vector operation unit according to any one of the foregoing embodiments.

According to a fourth aspect of this disclosure, a computer readable storage medium is provided. The storage medium stores a computer program, and the computer program is used for implementing the vector data computing method according to any one of the foregoing embodiments of this disclosure.

According to a fifth aspect of this disclosure, an electronic device is provided. The electronic device includes: a processor; and a memory configured to store processor-executable instructions. The processor is configured to read the executable instructions from the memory, and execute the instructions to implement the vector data computing method according to any one of the foregoing embodiments of this disclosure.

According to a sixth aspect of this disclosure, a computer program product is provided. When instructions in the computer program product are executed by a processor, the vector data computing method according to any one of the foregoing embodiments of this disclosure is implemented.

According to the vector data computing method and apparatus, the electronic device, and the storage medium that are provided in the foregoing embodiments of this disclosure, when vector data needs to be computed, the to-be-computed vector data and the corresponding first operation type may be determined. The target vector operation array and the target operation data path corresponding to the target vector operation array may be determined from the at least one preset vector operation unit based on the operation type. Thus, the target vector operation array may be controlled to compute the to-be-computed vector data through the target operation data path, to obtain the computation result corresponding to the to-be-computed vector data. Because the preset vector operation unit may support one or more operation data paths, and each operation data path corresponds to one computing function, a plurality of vector computing functions may be implemented by using the at least one preset vector operation unit, thereby improving richness and diversity of computing functions. Moreover, the preset vector operation unit is equivalent to an accelerator for vector computing, which may effectively improve computational efficiency as compared with performing vector computing by using a GPGPU through programming.

## BRIEF DESCRIPTION OF THE DRAWINGS

FIG. 1 is an exemplary application scenario of a vector data computing method according to this disclosure;
FIG. 2 is a schematic flowchart of a vector data computing method according to an exemplary embodiment of this disclosure;
FIG. 3 is a schematic flowchart of a vector data computing method according to another exemplary embodiment of this disclosure;
FIG. 4 is a schematic flowchart of a vector data computing method according to still another exemplary embodiment of this disclosure;
FIG. 5 is a schematic flowchart of a vector data computing method according to yet another exemplary embodiment of this disclosure;
FIG. 6 is a schematic flowchart of a vector data computing method according to still yet another exemplary embodiment of this disclosure;
FIG. 7 is a schematic diagram of a preset vector operation unit according to an exemplary embodiment of this disclosure;
FIG. 8 is a schematic diagram of a vector computing data path of a softmax operator according to an exemplary embodiment of this disclosure;
FIG. 9 is a schematic diagram of a vector computing data path of a layernorm operator according to an exemplary embodiment of this disclosure;
FIG. 10 is a schematic diagram of a computing principle of a pipeline manner according to an exemplary embodiment of this disclosure;
FIG. 11 is a schematic diagram of a structure of a vector data computing apparatus according to an exemplary embodiment of this disclosure;
FIG. 12 is a schematic diagram of a structure of a vector data computing apparatus according to another exemplary embodiment of this disclosure;
FIG. 13 is a schematic diagram of a structure of a vector data computing apparatus according to still another exemplary embodiment of this disclosure;
FIG. 14 is a schematic diagram of a structure of a vector data computing apparatus according to yet another exemplary embodiment of this disclosure; and
FIG. 15 is a diagram of a structure of an electronic device according to an embodiment of this disclosure.

## DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

Overview of this disclosure

In a process of implementing this disclosure, the inventor finds that with constant promotion of transformer network structures, vector computing has gradually become an important computing mode besides matrix computing. The vector computing has characteristics of numerous operator types and diverse functional combinations. For example, the vector computing may include complex computing such as a softmax (normalization index) operator, a layernorm (layer normalization) operator, an LUT (look-up-table) operator, and common operators such as mult (multiplication), add (addition), reduce (a reduction operation), and logic (a logical operation). In related technologies, vector computing is usually accelerated by using vector accelerator engines or general-purpose computing on graphics processing units (GPGPUs for short). However, conventional vector accelerator engines have limited functions and poor flexibility; and the general-purpose graphics processing units are flexible in programming and may implement general-purpose vector computing through programmable pipelines, but have lower computational efficiency compared to the vector accelerator engines due to reliance on programming.

Exemplary overview

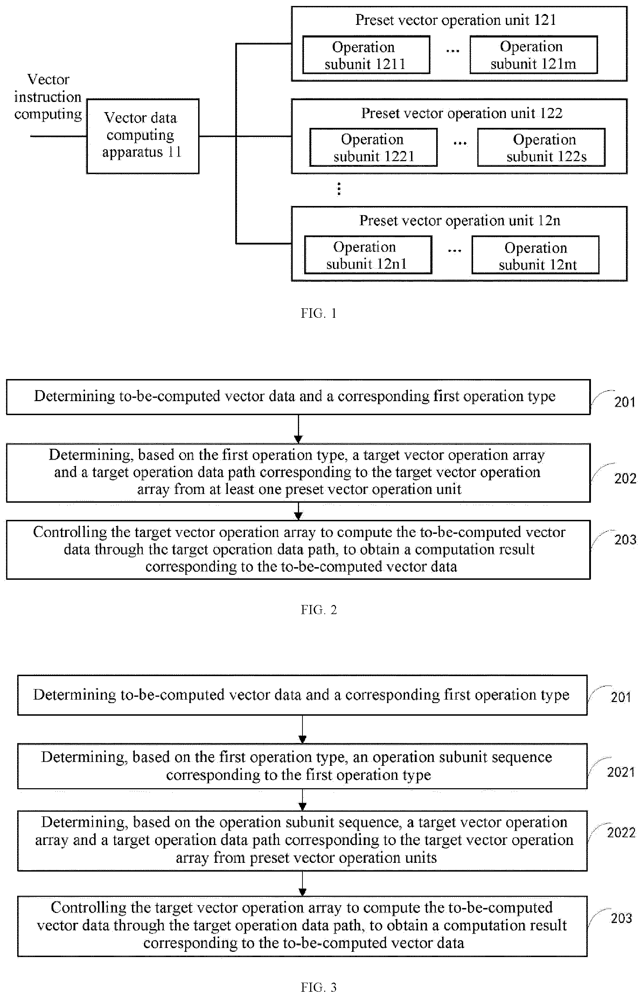

FIG. 1 is an exemplary application scenario of a vector data computing method according to this disclosure. As shown in FIG. 1, the vector data computing method in this disclosure may be implemented by using a vector data computing apparatus 11 in this disclosure. Vector computing instructions may be generated by a central processing unit (CPU) or other processing devices that require vector computing, and may be transmitted to the vector data computing apparatus 11. The vector computing instruction may include to-be-computed vector data or index information of the to-be-computed vector data. The index information may be, for example, address information of the to-be-computed vector data. Alternatively, the vector computing instruction may include to-be-computed feature data or index information of the to-be-computed feature data. One or more to-be-computed vectors are determined based on the to-be-computed feature data. The vector computing instruction may also include an operation type (referred to as a first operation type) corresponding to the to-be-computed vector data. The vector data computing apparatus 11 may determine the to-be-computed vector data and the corresponding first operation type based on the vector computing instruction. Operation types may include point-to-point types such as addition, subtraction, multiplication, division, comparison, quantization, inverse quantization, logical operations, and table lookup, and reduction operation types such as finding a maximum value, finding a minimum value, summation, and logical operations. The operation types may also include complex operation types composed of simple operations, such as softmax and layernorm. The reduction operation types refer to operation types that reduce vector lengths through corresponding operations. For example, the operation of finding a maximum value is to find a largest element among all elements in a vector, and reduce a vector length to 1 (that is, an operation result only includes one element). In this way, the vector data computing apparatus 11 may determine, based on the first operation type, a target vector operation array that can be used for vector computing of the to-be-computed vector data and a target operation data path used for implementing vector computing of the first operation type in the target vector operation array from at least one preset vector operation unit (such as a preset vector operation unit 121, a preset vector operation unit 122, ..., and a preset vector operation unit 12n in FIG. 1, where n is a positive integer). The target vector operation array may include one or more preset vector operation units, each of which may include one or more operation subunits. For example, the preset vector operation unit 121 includes m operation subunits from an operation subunit 1211 to an operation subunit 121m, the preset vector operation unit 122 includes s operation subunit, and the preset vector operation unit 12n includes t operation subunits. m, s, and t are all positive integers. The target operation data path may include an operation data path including one or more operation subunits of each preset vector operation unit in the target vector operation array. Any two preset vector operation units may be homogeneous or heterogeneous vector accelerator engines. To be specific, two preset vector operation units may have a same structure or different structures. For example, types and a quantity of the operation subunits included in the preset vector operation unit 121 may be same or different from those of the operation subunits included in the preset vector operation unit 122. Each operation subunit may complete one operation. After the target vector operation array and the corresponding target operation data path are determined, the target vector operation array may be controlled to compute the to-be-computed vector data through the target operation data path, to obtain a computation result corresponding to the to-be-computed vector data. For example, each operation subunit on the target operation data path may be enabled, so that the target operation data path can enter a working status to transmit the to-be-computed vector data to a starting operation subunit on the target operation data path, and provide a working clock to each operation subunit on the target operation data path to control a working sequence of the operation subunits. In this case, all operation subunits work together to perform computations on the to-be-computed vector data to obtain the computation result. Because the preset vector operation unit may support one or more operation data paths, and each operation data path corresponds to one computing function, a plurality of vector computing functions may be implemented by using the at least one preset vector operation unit, thereby effectively improving richness and diversity of computing functions. Moreover, the preset vector operation unit is equivalent to an accelerator for vector computing, which may effectively improve computational efficiency as compared with performing vector computing by using a GPGPU through programming.

The vector data computing apparatus 11 and preset vector operation units in this disclosure may form a vector processor in this disclosure, for vector computing of operation types in scenarios.

Exemplary method

FIG. 2 is a schematic flowchart of a vector data computing method according to an exemplary embodiment of this disclosure. This embodiment may be applicable to chips for accelerating computing in electronic devices, such as an in-vehicle computing platform, a mobile phone, a tablet, and other terminal devices. As shown in FIG. 2, the method in this embodiment of this disclosure may include the following steps.

Step 201: Determining to-be-computed vector data and a corresponding first operation type.

The to-be-computed vector data may include one or more to-be-computed vectors (that is, vectors), and the first operation type refers to an operator type used for computing the to-be-computed vector data. Operator types (that is, operation types) may include point-to-point types such as addition, subtraction, multiplication, division, comparison, quantization, inverse quantization, logical operations, and table lookup, and reduction operation types such as finding a maximum value, finding a minimum value, summation, and logical operations. The operator types may also include complex operation types composed of simple operations, such as softmax, layernorm, and LUT.

In some optional embodiments, a vector computing task (or a vector computing instruction) may be obtained from a component such as a CPU or a microcontroller that can generate the vector computing task (or the vector computing instruction), and the to-be-computed vector data and the corresponding first operation types may be determined from the vector computing task (or the vector computing instruction). For example, during an inference process of a neural network model, for an operator, in the neural network model, on which vector computing can be performed by using the method in this embodiment of this disclosure, the CPU generates a vector computing task (or a vector computing instruction) and distributes the same to a vector data computing apparatus in an embodiment of this disclosure. Vector data computing is implemented by using the method in this embodiment of this disclosure.

In some optional embodiments, there may be one or more pieces of to-be-computed vector data. For a case where there are a plurality pieces of to-be-computed vector data, the plurality pieces of to-be-computed vector data may be of a same operation type or different operation types. Each piece of to-be-computed vector data may have a corresponding first operation type. The plurality pieces of to-be-computed vector data may be from a same vector computing task or respectively from different vector computing tasks. This is not specifically limited.

Step 202: Determining, based on the first operation type, a target vector operation array and a target operation data path corresponding to the target vector operation array from at least one preset vector operation unit.

The preset vector operation unit supports one or more operation data paths, and any of the one or more operation data paths corresponds to one computing function.

In some optional embodiments, each preset vector operation unit may include one or more operation subunits, each of which may perform one basic operation. For example, the operation subunit may be a reduce sum unit for calculating a sum of all elements in a vector. For another example, the operation subunit may be an FMUL unit for performing a floating-point multiplication operation. For still another example, the operation subunit may be an FADD unit for performing a floating-point addition operation. The specific operation subunit may be set according to actual requirements. operation subunits in the preset vector operation unit may have one or more combinations, and different combinations form different operation data paths. Each operation subunit may be used separately, that is, may serve as a separate operation data path. Some of the operation subunits may also be combined for use. For example, the preset vector operation unit includes three operation subunits, that is, an operation subunit a, an operation subunit b, and an operation subunit c. The preset vector operation unit may support, for example, at least one of the following operation data paths: a, b, c, a→b, a→c, b→c, b→a, c→b, c→a, a→b→c, c→b→a, a→c→b, and c→a→b. Taking a → b as an example, it indicates that computing is performed by using the operation subunit a and the operation subunit b, so as to implement an operation data path. Thus, the preset vector operation unit may support one or more operation data paths.

In some optional embodiments, for a case of a plurality of preset vector operation units, at least two of the plurality of preset vector operation units may be heterogeneous operation units. That two preset vector operation units are heterogeneous operation units refers to that at least one of the following is satisfied: types or quantities of the operation subunits included in the two preset vector operation units are different, and the operation data paths supported by the two preset vector operation units are different.

In some optional embodiments, operation subunits required for vector computing and a data dependency relationship between the operation subunits may be determined based on the first operation type. In this way, the target vector operation array and the target operation data path corresponding to the target vector operation array may be determined from preset vector operation units based on the required operation subunits and the data dependency relationship between the operation subunits in combination with the operation data paths supported by the preset vector operation unit. The target vector operation array is an array composed of one or more preset vector operation units that participate in operations of the first operation type. In other words, the target vector operation array may include one or more preset vector operation units. The target operation data path refers to an operation data path in each preset vector operation unit in the target vector operation array that specifically participates in the operations of the first operation type; and may include one or more operational subunits in the target vector operation array. These operation subunits are interconnected to form the target operation data path.

In some optional embodiments, interconnected operation data paths may be preset between the plurality of preset vector operation units, so that the plurality of preset vector operation units may be combined for use, thereby implementing complex or continuous vector computing. An interconnection mode between the preset vector operation units may be set according to actual vector computing requirements, which is not limited in the embodiments of this disclosure.

Step 203: Controlling the target vector operation array to compute the to-be-computed vector data through the target operation data path, to obtain a computation result corresponding to the to-be-computed vector data.

Computing the to-be-computed vector data through the target operation data path may refer to controlling all operation subunits that form the target operation data path to work according to a certain working sequence, so as to complete computing of the to-be-computed vector data. The computation result corresponding to the to-be-computed vector data is a vector computation result of the to-be-computed vector data. For example, if an addition operation is performed on the to-be-computed vector data, the computation result is an addition operation result.

In some optional embodiments, corresponding control modes may be pre-configured for different operation data paths, respectively. After the target operation data path is determined, the target vector operation array may be controlled according to the control mode corresponding to the target operation data path to compute the to-be-computed vector data through the target operation data path.

In some optional embodiments, for a plurality pieces of to-be-computed vector data of a same operation type, a respective corresponding computation result may be obtained for the to-be-computed vector data through one target operation data path by means of serial computing or pipeline computing. Alternatively, with sufficient computing resources, a respective corresponding computation result may be obtained for the to-be-computed vector data through a plurality of target operation data paths by means of parallel computing, so as to further improve computational efficiency.

According to the vector data computing method provided in the embodiments of this disclosure, during computing of the vector data, the to-be-computed vector data and the corresponding first operation type thereof may be determined. The target vector operation array and the target operation data path corresponding to the target vector operation array may be determined from the at least one preset vector operation unit based on the operation type. Thus, the target vector operation array may be controlled to compute the to-be-computed vector data through the target operation data path, to obtain the computation result corresponding to the to-be-computed vector data. Because the preset vector operation unit may support one or more operation data paths, and each operation data path corresponds to one computing function, a plurality of vector computing functions may be implemented by using the at least one preset vector operation unit, thereby improving richness and diversity of computing functions. Moreover, the preset vector operation unit is equivalent to an accelerator for vector computing, which may effectively improve computational efficiency as compared with performing vector computing by using a GPGPU through programming.

In some optional embodiments, on the basis of the embodiment shown in FIG. 2, step 201 of determining to-be-computed vector data may include: obtaining to-be-computed feature data; determining at least one vector based on the to-be-computed feature data and according to a preset vector dimension; and determining the vector as the to-be-computed vector data.

The to-be-computed feature data may be input feature data during neural network computation or feature data generated during inference, which is not specifically limited. The preset vector dimension may be a dimension of an input vector supported by the preset vector operation unit, that is, a quantity of elements included in the input vector (that is, a length of the input vector). For example, if the input vector supported by the preset vector operation unit is a vector including 512 elements, the dimension of the preset vector is 512.

In some optional components, the to-be-computed feature data may be obtained from a component that performs model inference, such as a CPU; or may be obtained from a storage space designated by the CPU for storing the to-be-computed feature data.

In some optional embodiments, a transformation mode of converting the to-be-computed feature data into at least one vector may be pre-configured, and according to the transformation mode, the to-be-computed feature data may be determined as at least one vector based on the preset vector dimension. When a quantity of elements in the to-be-computed feature data is greater than the preset vector dimension, the to-be-computed feature data may be determined as a plurality of vectors based on the preset vector dimension. It should be noted that, generally, the to-be-computed feature data may be determined as a plurality of vectors only when the to-be-computed feature data may be partitioned for vector computing.

In the embodiments, for the to-be-computed feature data of the neural network model, at least one vector may be determined based on the preset vector dimension supported by the preset vector operation unit, to serve as the to-be-computed vector data. In this way, vector computing for feature data of different neural network models may be implemented by using the preset vector operation unit, helping to improve utilization of the preset vector operation unit.

In some optional embodiments, the preset vector operation units may be coupled to a preset storage to read input vector data from the preset storage and/or output a vector computation result to the preset storage during an operation process.

The preset storage may be a memory of any type. For example, the preset storage may be a memory (mem for short). A coupling mode between the preset vector operation unit and the preset storage may include connecting the preset vector operation unit to the preset storage through a bus or indirectly connecting the preset vector operation unit to the preset storage through an intermediate device. For example, the preset vector operation unit is connected to the preset storage through direct memory access (DMA). Each of preset vector operation units is connected to the preset storage to facilitate data transmission between the preset vector operation units through the preset memory. For example, if the vector computation result of a preset vector operation unit A needs to be used as input data of a preset vector operation unit B, the preset vector operation unit A may output the computation result to the preset memory, and the preset vector operation unit B may read the computation result of the preset vector operation unit A from the preset storage to continue the computing.

In the embodiments, each of preset vector operation units is coupled to the preset memory, so that the preset vector operation units may be connected to each other, so as to implement data transmission between the preset vector operation units. In this way, complex or continuous vector computing may be implemented by using a plurality of preset vector operation units, which helps to expand more vector computing functions based on a fixed quantity of preset vector operation units, thereby further improve the utilization of the preset vector operation units.

FIG. 3 is a schematic flowchart of a vector data computing method according to another exemplary embodiment of this disclosure.

In some optional embodiments, on the basis of any one of the foregoing embodiments, as shown in FIG. 3, step 202 of determining, based on the first operation type, a target vector operation array and a target operation data path corresponding to the target vector operation array from at least one preset vector operation unit may include the following steps.

Step 2021: Determining, based on the first operation type, an operation subunit sequence corresponding to the first operation type.

The operation subunit sequence may include information about one or more operation subunits required for completing an operation of the first operation type, and an operation sequence of the operation subunits (also referred to as a data dependency relationship between the operation subunits). The information about the operation subunit may be, for example, a name or a type of the operation subunit. For example, a vector operation of a softmax operator requires a plurality of operation subunits, which work together in a certain operation sequence to implement a complete operation of softmax.

In some optional embodiments, for operation types, operation subunit sequences respectively corresponding to the operation types may be set in advance, and a mapping relationship between the operation type and the operation subunit sequence may be stored. In this case, after the first operation type corresponding to the to-be-computed vector data is determined, the operation subunit sequence corresponding to the first operation type may be determined according to the mapping relationship.

Step 2022: Determining, based on the operation subunit sequence, the target vector operation array and the target operation data path corresponding to the target vector operation array from preset vector operation units.

After the operation subunit sequence is determined, target operation subunits in target vector operation units that need to participate in the operation may be determined from the preset vector operation units based on information about the operation subunits included in the preset vector operation units and information about a data path between the operation subunits. The target vector operation units form the target vector operation array, and the target operation subunits in the target vector operation units and an interconnection structure of the target operation subunits form the target operation data path. Because each preset vector operation unit may include one or more operation subunits, the preset vector operation unit may support one or more operation data paths. In a case where the preset vector operation unit is used as the target vector operation unit, if the preset vector operation unit supports a plurality of operation data paths, the current operation may only require one of the operation data paths. Therefore, the target vector operation array composed of the target vector operation units may include operation subunits that do not participate in the current operation. These operation subunits may be scheduled for other vector computing tasks to implement unified scheduling of a plurality of computing tasks.

In some optional embodiments, the operation subunits corresponding to the information about the operation subunits may be determined based on the information about the operation subunits in the operation subunit sequence, and the preset vector operation units that meet the operation sequence of the operation subunits may form the target vector operation array. The operation data path of each operation subunit corresponding to the operation subunit sequence in the target vector operation array may be used as the target operation data path.

In the embodiments, by determining the operation subunit sequence corresponding to the first operation type, the target vector operation array and the target operation data path that participate in the operation may be accurately obtained, thereby ensuring accurate computation of the to-be-computed vector data.

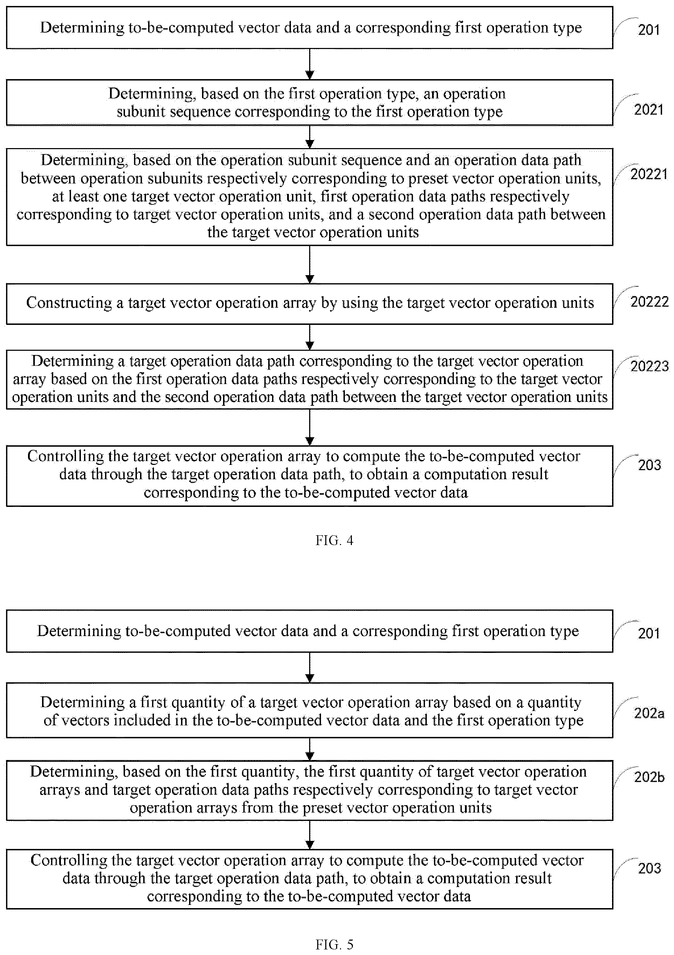

FIG. 4 is a schematic flowchart of a vector data computing method according to still another exemplary embodiment of this disclosure.

In some optional embodiments, as shown in FIG. 4, step 2022 of determining, based on the operation subunit sequence, the target vector operation array and the target operation data path corresponding to the target vector operation array from preset vector operation units may include the following steps.

Step 20221: Determining, based on the operation subunit sequence and an operation data path between operation subunits respectively corresponding to the preset vector operation units, at least one target vector operation unit, first operation data paths respectively corresponding to target vector operation units, and a second operation data path between the target vector operation units.

For each one of the preset vector operation units, the operation data path between the operation subunits in this preset vector operation unit may be preset. To be specific, in a circuit design phase of the preset vector operation unit, an interconnection structure between the operation subunits in the preset vector operation unit may be set based on the operation subunits included in the preset vector operation unit and the operation subunits required by each operation type. The operation subunits that need to be connected may be connected in a certain sequence to form the operation data path between the operation subunits. For example, an output end of the operation subunit a is connected to an input end of the operation subunit b, and an output end of the operation subunit b is connected to an input end of the operation subunit c, so as to form an operation data path between a plurality of operation subunits with an interconnection structure of a → b → c. An output end of an operation subunit may be connected to an input end of one or more other operation subunits, and an input end of an operation subunit may also be connected to an output end of one or more other operation subunits, so that the preset vector operation unit may support one or more operation data paths, and information about the operation data path between the operation subunits supported by the preset vector operation unit may be stored. An operation data path between the preset vector operation units may also be preset and corresponding information about the operation data path may be stored. Alternatively, information about all operation data paths that the preset vector operation units can support may be stored comprehensively. For example, the information about all operation data paths that the preset vector operation units can support may be stored in a form of a list. The information about the operation data path may include a sequence of operation subunit identifiers. Moreover, a corresponding operation subunit control mode may be set for each type of operation data paths to achieve work control for the corresponding operation data paths, thereby implementing corresponding vector computing. During a work process, after the operation subunit sequence corresponding to the first operation type is determined, the operation subunit sequence may be matched with pre-stored information about the operation data path to determine at least one target vector operation unit that needs to participate in the operation, the operation data paths respectively corresponding to the target vector operation units (referred to as the first operation data paths), and the operation data path between the target vector operation units (referred to as the second operation data path). The operation data path corresponding to a target vector operation unit refers to an operation data path, among the operation data paths supported by the target vector operation unit, which needs to participate in the current operation. The operation data path between the target vector operation units is formed by an interconnection structure between the target vector operation units. Because the operation subunit sequence includes the data dependency relationship between the operation subunits required for the operation, a data dependency relationship between the target vector operation units may be determined based on a sorting sequence of the target operation subunits participating in the operation in each target vector operation unit in the operation subunit sequence, so as to determine an interconnection sequence between the target vector operation units. For example, if an output end of one target vector operation unit is connected to an input end of another target vector operation unit, connection between the target operation subunits participating in the operation in two target vector operation units may be achieved. For example, the operation subunit sequence includes operation subunit a → operation subunit b → operation subunit c. The operation subunit a uses a same operation subunit as the operation subunit a in a target vector operation unit A, the operation subunit b uses a same operation subunit as the operation subunit b in a target vector operation unit B, and the operation subunit c uses a same operation subunit as the operation subunit c in a target vector operation unit C. According to the operation subunit sequence, it may be determined that an output result of the target vector operation unit A needs to be input of the target vector operation unit B, and an output result of the target vector operation unit B needs to be input of the target vector operation unit C. Thus, an operation sequence of the target vector operation units is obtained, and the second operation data path between the target vector operation units is obtained, so that three target operation subunits participating in the operation in the target vector operation units A, B, and C may be connected to perform computations collaboratively.

In some optional embodiments, the operation data path between the preset vector operation units may achieve data exchange through the interconnection structure between the preset vector operation units, may achieve indirect data exchange through the preset memory, and may also achieve data transmission through broadcast interaction between the preset vector operation units. The broadcast interaction indicates that an output result of one preset vector operation unit is simultaneously transmitted to a plurality of other preset vector operation units. A specific data exchange mode is not limited. The output result of the preset vector operation unit may be an output result of any of the one or more operation data paths in the preset vector operation unit.

Step 20222: Constructing the target vector operation array by using the target vector operation units.

The target vector operation units are interconnected in a manner that meets requirements of the operation subunit sequence, to construct the target vector operation array. An interconnection mode may be direct connection through transmission lines or indirect interconnection through the preset memory. For example, an output end of the target vector operation unit A is interconnected with an input end of the target vector operation unit B.

Step 20223: Determining the target operation data path corresponding to the target vector operation array based on the first operation data paths respectively corresponding to the target vector operation units and the second operation data path between the target vector operation units.

The first operation data path is a data path between the target operation subunits in the target vector operation unit that need to participate in the operation. The second operation data path is a data path between the target vector operation units, and is used to connect the first operation data paths to form a complete target operation data path, for implementing complete computation for the to-be-computed vector data.

In some optional embodiments, if there is only one target vector operation unit, there is no second operation data path, and the target operation data path corresponding to the target vector operation array may be obtained based on the first operation data path corresponding to the target vector operation unit.

In the embodiments, the target operation data path may be formed by using the first operation data path between the operation subunits in the preset vector operation unit and the second operation data path between the preset vector operation units, so that vector computing of the to-be-computed vector data may be implemented by using a plurality of preset vector operation units. In this way, on one hand, complex or continuous vector computing may be implemented, and more vector computing functions may be expanded; and on the other hand, unified scheduling of a plurality of preset vector operation units is facilitated, thereby further improving the utilization of the preset vector operation units and enhancing application flexibility of the preset vector operation units. Moreover, parallel execution of a plurality of vector computing tasks may be supported when computing resources of the preset vector operation unit are sufficient, which helps to improve execution efficiency for the vector computing tasks.

In some optional embodiments, step 202 of determining, based on the first operation type, a target vector operation array and a target operation data path corresponding to the target vector operation array from at least one preset vector operation unit may include: determining the target vector operation array and the target operation data path corresponding to the target vector operation array based on the first operation type, and mapping relationships between an operation type and the preset vector operation unit and the operation data path.

The mapping relationships between the operation type and the preset vector operation unit and the operation data path (a mapping relationship corresponding to the operation type for short) may include preset vector operation units that correspond to operation types and need to participate in the operation and the operation data paths in the preset vector operation units that need to participate in the operation.

In some optional embodiments, for each operation type, there may be one or more optional mapping relationships corresponding to that operation type. In other words, each preset vector operation unit may have one or more vector computing modes for implementing that operation type. For example, the operation data paths between the preset vector operation units and the operation data path between the operation subunits in each preset vector operation unit may form a plurality of operation data paths that satisfy requirements of the operation subunit sequence corresponding to the operation type. In this case, vector computing for that operation type may be implemented through any operation data path that satisfies the requirements. In this case, in an actual operation process, the mapping relationship that can currently satisfy operation requirements of that operation type may be selected based on an idle status of each operation subunit in each preset vector operation unit, to obtain the target vector operation array and the target operation data path that correspond to that operation type.

In some optional embodiments, for each operation type that possibly needs to be implemented, the mapping relationships between the operation type and the preset vector operation unit and the operation data path may be established in advance in combination with a situation of the operation data paths that may be supported by the preset vector operation unit. Therefore, during real-time operation, the target vector operation array and the target operation data path may be directly determined based on the mapping relationships.

In the embodiments, the mapping relationships between the operation type and the preset vector operation unit and the operation data path are established in advance, so that the target vector operation array and the target operation data path that correspond to a current to-be-computed operation type may be quickly and accurately determined, thereby further improving computational efficiency.

FIG. 5 is a schematic flowchart of a vector data computing method according to yet another exemplary embodiment of this disclosure.

In some optional embodiments, on the basis of any one of the foregoing embodiments, as shown in FIG. 5, step 202 of determining, based on the first operation type, a target vector operation array and a target operation data path corresponding to the target vector operation array from at least one preset vector operation unit may include the following steps.

Step 202a: Determining a first quantity of the target vector operation array based on a quantity of vectors included in the to-be-computed vector data and the first operation type.

The to-be-computed vector data may include one or more vectors. For a case where there is one vector, it is required to determine one target vector operation array and the corresponding target operation data path. For a case where there are a plurality of vectors, one or more target vector operation arrays may be determined based on a specific quantity of the vectors and the first operation type. In other words, the first quantity may be one or more. Each target vector operation array may include one or more preset vector operation units, and the target operation data path corresponding to the target vector operation array may be formed by specified operation subunits in each preset vector operation unit.

In some optional embodiments, in a case where the computing resources of the preset vector operation unit are sufficient, the first quantity of the target vector operation array may be same as the quantity of the vectors. For example, if the operation type is a simple multiplication operation and each of h (h is a positive integer) preset vector operation units includes operation subunits capable of completing the multiplication operation, each one of the plurality of preset vector operation units may form a target vector operation array. In a case where the quantity of the vectors included in the to-be-computed vector data is less than or equal to h, it may be determined that the first quantity of target vector operation arrays is the quantity of the vectors.

In some optional embodiments, the first quantity may be determined based on vector data included in the to-be-computed vector data, and a quantity of candidate modes of the preset vector operation units and the operation data paths that can support vector operations of the to-be-computed vector data. Each combination of preset vector operation units that can support the vector operation of the to-be-computed vector data and the corresponding operation data paths that support a complete vector operation is referred to as a candidate mode. For example, if the operation type is relatively complex, the operation subunits in a plurality of preset vector operation units may form a plurality of operation data paths that complete this operation type in parallel. Thus, a combination of the preset vector operation units corresponding to each operation data path that can complete this operation type in parallel may form a target vector operation array. In this case, the first quantity of the target vector operation arrays is a quantity of the operation data paths that can complete this operation type in parallel.

In some optional embodiments, the first quantity of the target vector operation arrays is determined based on the quantity of the vectors, the first operation type, and the mapping relationships between the operation type and the preset vector operation unit and the operation data path. The mapping relationships between the operation type and the preset vector operation unit and the operation data path may characterize one or more candidate modes that can support the vector computing of each operation type. The first quantity of the target vector operation arrays may be determined according to a situation of parallel computing of candidate modes corresponding to the first operation. For example, there are a plurality of vectors, and among the candidate modes, there are I (I is a positive integer) candidate modes for parallel computing to implement vector computing of the first operation type respectively. If the quantity of the vectors is greater than or equal to I, the first quantity is I. Thus, computing of the vectors may be performed in parallel in batches through I target operation data paths, or the computing of the vectors may be completed in parallel in a pipeline manner through the target operation data paths. If the quantity of the vectors is less than I, the first quantity is the quantity of the vectors, and the computing of the vectors may be completed in parallel through the first quantity of target operation data paths.

In some optional embodiments, any two of the first quantity of target vector operation arrays may have a same preset vector operation unit, which may be specifically determined based on the operation data paths of candidate modes for the first operation type. For example, if the operation data paths corresponding to one candidate mode for the first operation type includes the operation subunit a in the preset vector operation unit A, and the operation data paths corresponding to another candidate mode includes the operation subunit b in the preset vector operation unit A, the target vector operation arrays for the two candidate modes both include the preset vector operation unit A.

Step 202b: Determining, based on the first quantity, the first quantity of target vector operation arrays and the target operation data paths respectively corresponding to target vector operation arrays from the preset vector operation units.

If the first quantity is equal to a quantity of candidate modes corresponding to the first operation type, each candidate mode corresponding to the first operation type is determined as the target vector operation array and the corresponding target operation data path. If the first quantity is less than the quantity of the candidate modes corresponding to the first operation type, a first quantity of candidate modes may be selected from the candidate modes, and each candidate mode corresponds to one target vector operation array and a corresponding target operation data path.

In the embodiments, the quantity of the target vector operation arrays may be determined based on the quantity of the vectors included in the to-be-computed vector data. In a case where the preset vector operation unit has sufficient resources, computing for a plurality of vector may be performed by using a plurality of target vector operation arrays and the corresponding target operation data paths, thereby further improving the computational efficiency.

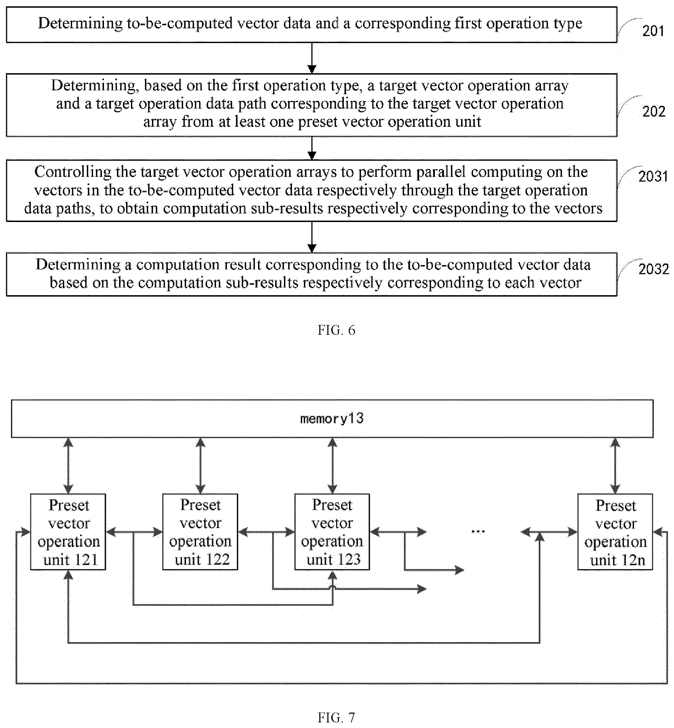

FIG. 6 is a schematic flowchart of a vector data computing method according to still yet another exemplary embodiment of this disclosure.

In some optional embodiments, on the basis of any one of the foregoing embodiments, as shown in FIG. 6, step 203 of controlling the target vector operation array to compute the to-be-computed vector data through the target operation data path, to obtain a computation result corresponding to the to-be-computed vector data may include the following steps.

Step 2031: Controlling the target vector operation arrays to perform parallel computing on the vectors in the to-be-computed vector data respectively through the target operation data paths, to obtain computation sub-results respectively corresponding to the vectors.

According to a pre-configured control mode corresponding to a target vector operation array, the target operation data path of the target vector operation array may be controlled to perform parallel computing on a vector in the to-be-computed vector data, to obtain the computation sub-results respectively corresponding to the vectors.

Step 2032: Determining the computation result corresponding to the to-be-computed vector data based on the computation sub-results respectively corresponding to the vectors.

If a vector is a sub-vector obtained by partitioning a high-dimensional (that is, with a longer length) vector (which may be referred to as a parent vector), post processing may be performed on the computation sub-results respectively corresponding to the vectors, so as to obtain a computation result corresponding to the high-dimensional vector, that is, the computation result corresponding to the to-be-computed vector data. The post processing may be determined based on the specific operation type. For example, for operations such as an addition operation for vectors (that is, adding corresponding elements of two to-be-computed vectors), elements of the operation result have a corresponding relationship with the elements of the vectors. To be specific, the operation result is a vector, and a length of the operation result is same as that of the to-be-computed vector. In this case, computation sub-results may be merged into a high-dimensional computation result in a vector partitioning sequence, and thus the computation result corresponding to the to-be-computed vector data may be obtained. For operations that change the length of the vector, such as simplification operations for the vector (also referred to as reduction operations), a post-processing mode for the computation sub-result may be determined based on an association relationship between an actual computation result of the high-dimensional vector and the computation sub-result of the vector obtained through partitioning. For example, reduction operations such as calculating a sum of all elements in one vector and determining a maximum value or a minimum value of all elements in one vector require further computation on the computation sub-results respectively corresponding to the vectors, to obtain the computation result corresponding to the high-dimensional vector. For example, a sum of all elements in the high-dimensional vector is calculated, and after the computation sub-results of the vectors obtained through partitioning is obtained, all computation sub-results are summed, so as to obtain the computation result corresponding to the high-dimensional vector. If a vector is independent and is not obtained by partitioning the high-dimensional vector, the corresponding computation sub-results of the vectors may be determined as the computation result corresponding to the to-be-computed vector data. The computation result includes the corresponding computation sub-results of the vectors.

In the embodiments, efficiency of vector computing may be effectively improved by computing the vectors in the to-be-computed vector data in parallel.

In some optional embodiments, step 203 of controlling the target vector operation array to compute the to-be-computed vector data through the target operation data path, to obtain a computation result corresponding to the to-be-computed vector data may include:

determining a quantity of operation subunits included in the target operation data path of the target vector operation array; and in response to that there are a plurality of operation subunits included in the target operation data path, controlling the target vector operation array to compute the to-be-computed vector data in a pipeline manner through the target operation data path, to obtain the computation result corresponding to the to-be-computed vector data.

If there are a plurality of operation subunits included in the target operation data path, the plurality of operation subunits compute a vector input into the target operation data path in a certain sequence and obtain a computation sub-result corresponding to that vector. In a case where the to-be-computed vector data includes a plurality of vectors, or in a case of a plurality pieces of consecutive to-be-computed vector data (that is, there are a plurality of consecutive vector computing tasks, where each piece of to-be-computed vector data corresponds to one vector computing task, and may include one or more vectors), the plurality of operation subunits in the target operation data path of the target vector operation array may be controlled to compute in a pipeline manner to obtain the computation result corresponding to the to-be-computed vector data. The pipeline manner refers to that the operation subunits in the target operation data path can perform different vector related computations at a same moment. For example, if the target operation data path includes operation subunit a → operation subunit b → operation subunit c, and the to-be-computed vector data includes three vectors, which are respectively represented by using r1, r2, and r3, the operation subunit a first performs computations on the r1, and outputs a computation result s11 of the r1 to the operation subunit b after completing the computations on the r1. The operation subunit b continues to perform computations on the s11 while the operation subunit a starts to compute the r2. Moreover, after computations of the r2 are completed, and the operation subunit b completes relevant computations of the S11 and outputs a computation result s12 to the operation subunit c, the operation subunit a transmits a computation result s21 of the r2 to the operation subunit b. The operation subunit b continues to perform relevant operations on the s21, the operation subunit c performs relevant operations on the s12, and meanwhile, the operation subunit a starts to perform operations on the r3. In this case, the operation subunits a, b, and c are all working, but execute data streams of different vectors. Such manner is referred to as a pipeline manner. For the case of a plurality pieces of consecutive to-be-computed vector data, data streams of different to-be-computed vector data may be executed in parallel in a plurality of operation subunits in the target operation data path of the target vector operation array in a pipeline manner, without waiting for one computation task to complete before proceeding to another computation task. By executing a plurality of tasks in a pipeline manner, processing efficiency may be further improved.

In the embodiments, when the target operation data path includes a plurality of operation subunits, the target operation data path may be controlled to perform computations in a pipeline manner, which is equivalent to performing parallel processing on a plurality of vectors, helping to further improve the computational efficiency.

In some optional embodiments, the pipeline manner may also be adopted between a plurality of preset vector operation units. To be specific, in the case where the target vector operation array includes a plurality of preset vector operation units, the plurality of preset vector operation units of the target vector operation array may be controlled to compute the to-be-computed vector data in a pipeline manner, to obtain the computation result corresponding to the to-be-computed vector data. At a same moment, the preset vector operation units in the target vector operation array may execute data streams of different vectors.

In some optional embodiments, FIG. 7 is a schematic diagram of a preset vector operation unit according to an exemplary embodiment of this disclosure. As shown in FIG. 7, for example, the preset storage is a memory 13, each preset vector operation unit is coupled to the memory 13 and may be connected to one or more other preset vector operation units. For example, the preset vector operation unit 121 may be connected to the preset vector operation unit 122, a preset vector operation units 123, ..., and the preset vector operation unit 12n (where n is a positive integer) to form the operation data path between the preset vector operation units. This facilitates collaborative computation between any preset vector operation units through unified task scheduling, thereby completing vector computing of operation types. Only some connections between the preset vector operation units are shown in FIG. 7. In practical applications, each preset vector operation unit may be scheduled separately, and any quantity of preset vector operation units may be scheduled in any combination. Combination modes of the preset vector operation units are not limited to those shown in FIG. 7. In view of the above, a plurality of different types of vector computing may be implemented by using a fixed quantity of preset vector operation unit, thereby greatly improving utilization and application flexibility of the preset vector operation unit.

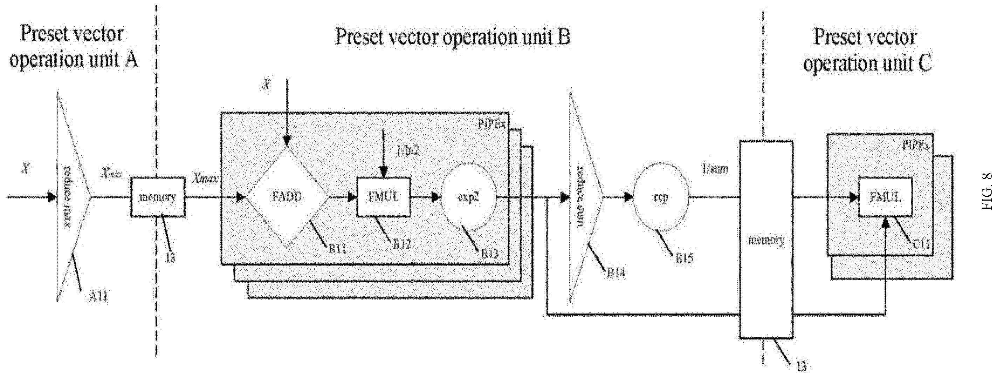

In some optional embodiments, FIG. 8 is a schematic diagram of a vector computing data path of a softmax operator according to an exemplary embodiment of this disclosure. As shown in FIG. 8, for the softmax operator, preset vector operation units that need to participate in an operation include the preset vector operation unit A, the preset vector operation unit B, and the preset vector operation unit C. The preset vector operation unit A includes an operation subunit A11 for finding a maximum value through reduction operations (reduce max). The preset vector operation unit B includes a floating-point addition (FADD) operation subunit B11, a floating-point multiplication (FMUL) operation subunit B12, a power operation of 2 (exp2) subunit B13, an operation subunit B14 for summation through reduction operations (reduce sum), and a reciprocal operation subunit B15. The preset vector operation unit C includes a floating-point multiplication (FMUL) operation subunit C11. PIPEx represents a pipeline. The memory 13 is a memory, and serves as a preset storage for data transmission between the preset vector operation units. A to-be-computed vector may be represented by using $X = [x_1, x_2, ..., x_N]$, where $N$ represents a dimension (or referred to as a length, that is, a quantity of elements) of the vector $X$. The softmax operator may be represented as below:

$$softmax(x_i) = \frac{e^{x_i}}{\sum_{j=1}^{N} e^{x_j}} = \frac{e^{x_i} \div e^{\max(X)}}{\sum_{j=1}^{N} e^{x_j} \div e^{max(X)}} = \frac{e^{x_i - \max(X)}}{\sum_{j=1}^{N} e^{x_j - \max(X)}}$$

It is satisfied that $i$ = 1, 2, ..., *or N*, wherein max($X$) represents finding a maximum element value in $X$, which is represented by using $X_{max}$. Referring to FIG. 8, the vector $X$ is input to a target operation data path corresponding to softmax, and the maximum element value $X_{max}$ in the vector $X$ is computed by using the reduce max operation subunit A11. The preset vector operation unit A writes $X_{max}$ into the memory 13, and the preset vector operation unit B reads the $X_{max}$ from the memory 13. A difference $x_i$ - max($X$) between each element $x_i$ in the $X$ and the $X_{max}$ is computed by using the FADD operation subunit B11. In this figure, by using the FMUL operation subunit B12, $x_i$ - max(X) is multiplied by $\frac{1}{ln2}$, and an exponential operation $e^{x_i-max(X)}$ is converted into a power operation of 2. Thus, $e^{x_i-max(X)}$ is obtained by using the exp2 operation subunit B13. By using the pipeline PIPEx, $e^{x_i-max(X)}$ corresponding to each $x_i$ in the $X$ may be computed in parallel, so that $\sum_{j=1}^{N} e^{x_j - \max(X)}$ may be calculated by using the reduce sum operation subunit B14. A reciprocal of $\sum_{j=1}^{N} e^{x_j - \max(X)}$ is calculated by using the rcp operation subunit B15, to obtain $\frac{1}{\sum_{j=1}^{N} e^{x_j - \max(X)}}$, which is represented by using 1/sum. The preset vector operation unit B writes the $e^{x_i-max(X)}$ corresponding to each $x_i$ and the 1/sum into the memory 13, while the preset vector operation unit C reads the 1/sum and the $e^{x_i-max(X)}$ corresponding to each $x_i$ from the memory 13. A product of the $e^{x_i-max(X)}$ corresponding to each $x_i$ and the 1/sum is calculated by using the FMUL operation subunit C11 in the pipeline, to obtain a corresponding softmax normalization result $softmax(x_i) = \frac{e^{x_i - max(X)}}{\sum_{j=1}^{N} e^{x_j - max(X)}}$ for each $x_i$. In this way, complex vector operations for the softmax operator are implemented by using the preset vector operation unit A, the preset vector operation unit B, and the preset vector operation unit C. Certainly, the preset vector operation unit A, the preset vector operation unit B, and the preset vector operation unit C may also include other operation subunits and may form other operation data paths. Only operation subunits that participate in softmax operations are shown in FIG. 8. In addition, the data transmission between the preset vector operation unit A, the preset vector operation unit B, and the preset vector operation unit C may also be independent of the memory 13. For example, the data transmission may be implemented through transmission line connections.

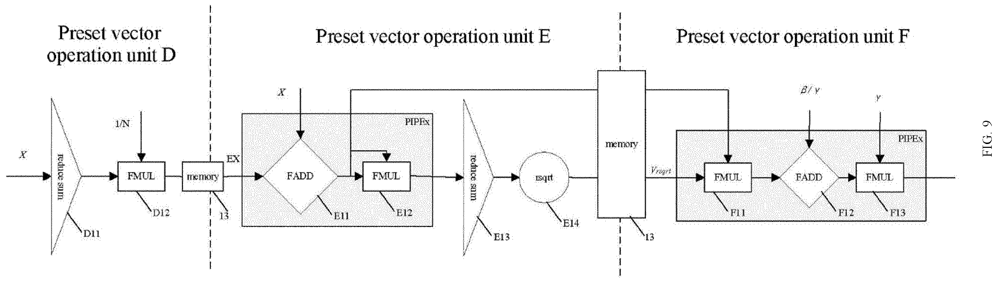

In some optional embodiments, FIG. 9 is a schematic diagram of a vector computing data path of a layernorm operator according to an exemplary embodiment of this disclosure. As shown in FIG. 9, for the layernorm operator, preset vector operation units that need to participate in an operation include a preset vector operation unit D, a preset vector operation unit E, and a preset vector operation unit F. The preset vector operation unit D includes an operation subunit D11 for summation through reduction operations (reduce sum) and a floating-point multiplication (FMUL) operation subunit D12. The preset vector operation unit E includes a floating-point addition (FADD) operation subunit E11, a floating-point multiplication (FMUL) operation subunit E12, an operation subunit E13 for summation through reduction operations (reduce sum), and a reciprocal square root (rsqrt) operator unit E14. The preset vector operation unit F includes a floating-point multiplication (FMUL) operation subunit F11, a floating-point addition (FADD) operation subunit F12, and a floating-point multiplication (FMUL) operation subunit F13. PIPEx represents a pipeline. The memory 13 is a memory, and serves as a preset storage for data transmission between the preset vector operation units. A to-be-computed vector may be represented by using $X = [x_1, x_2, ..., x_N]$, wherein $N$ represents a dimension (or referred to as a length, that is, a quantity of elements) of the vector $X$. The layernorm operator may be represented as below:

$$y = \frac{x_i - E(X)}{\sqrt{Var(X) + \epsilon}} * \gamma + \beta$$

$E(X)$ represents an expectation (that is, a mean value) of all elements in $X$, where $E(X) = \frac{1}{N}\sum_{i=1}^{N} x_i$; and $Var(X)$ represents a variance of all elements in $X$, wherein $Var(X) = \frac{1}{N}\sum_{i=1}^{N}(x_i - E(X))^2$. $\epsilon$ represents an initialized parameter value, which may be set to, for example, a very small positive number to prevent a denominator from becoming zero. $\gamma$ and $\beta$ are learnable parameters, which are known during a computation process. Referring to FIG. 9, the vector $X$ is input to a target operation data path corresponding to layernorm. A sum $\sum_{i=1}^{N} x_i$ of all elements in the $X$ is calculated by using the reduce sum operation subunit D11, and the mean value $E(X)$, which may be expressed by using EX, is calculated by using the FMUL operation subunit D12. The preset vector operation unit D writes the mean value EX into the memory 13. The preset vector operation unit E reads the mean value EX from the memory 13, and calculates a difference $x_i - E(X)$ between each element in the $X$ and the mean value EX by using the FADD operation subunit E11, so as to calculate $(x_i - E(X))^2$ by using the FMUL operation subunit E12, and writes the $x_i - E(X)$ into the memory 13. $Var(X) + \epsilon$ is calculated by using the reduce sum operation subunit E13, where $\epsilon$ may be included in an initial value of reduce sum. A reciprocal $\frac{1}{\sqrt{Var(X)+\epsilon}}$ of a square root of $Var(X) + \epsilon$ is calculated by using the rsqrt operation subunit E14, which is represented by using $V_{xrsqrt}$. The preset vector operation unit E writes $V_{xrsqrt}$ into the memory 13, and the preset vector operation unit F reads $V_{rsqrt}$ and the $x_i - E(X)$ corresponding to each element $x_i$ from the memory 13. A product of the $x_i - E(X)$ corresponding to each element $x_i$ and the $V_{xrsqrt}$ is calculated by using the FMUL operation subunit F11, to obtain a computation result of $\frac{x_i - E(X)}{\sqrt{Var(X)+\epsilon}}$. Further, a sum $\frac{x_i - E(X)}{\sqrt{Var(X)+\epsilon}} + \frac{\beta}{\gamma}$ of $\frac{x_i - E(X)}{\sqrt{Var(X)+\epsilon}}$ and $\frac{\beta}{\gamma}$ is calculated by using the FADD operation subunit F12, and then, a product of ($\frac{x_i - E(X)}{\sqrt{Var(X)+\epsilon}} + \frac{\beta}{\gamma}$) and $\gamma$ is calculated by using the FMUL operation subunit F13, to obtain a corresponding normalized result $\left(\frac{x_i - E(X)}{\sqrt{Var(X)+\epsilon}} + \frac{\beta}{\gamma}\right) * \gamma = \frac{x_i - E(X)}{\sqrt{Var(X)+\epsilon}} * \gamma + \beta$ for each element $x_i$. Certainly, the preset vector operation unit D, the preset vector operation E, and the preset vector operation unit F may also include other operation subunits and may form other operation data paths. Only operation subunits that participate in layernorm operations are shown in FIG. 9. In addition, the data transmission between the preset vector operation unit D, the preset vector operation unit E, and the preset vector operation unit F may also be independent of the memory 13. For example, the data transmission may be implemented through transmission line connections.

In some optional embodiments, the rsqrt operation subunit in FIG. 9 may be subdivided into a square root (sqrt) operation subunit and a reciprocal (rcp) operation subunit, so that the preset vector operation unit E can be enabled to adapt to more types of operator operations, thereby further improving utilization of the preset vector operation unit.

In some optional embodiments, any one of the preset vector operation units D, E, and F in FIG. 9 may be same as a certain preset vector operation unit in FIG. 8, provided that this preset vector operation unit has different operation subunits that participate in operations in different operators. For example, the preset vector operation unit B and the preset vector operation unit E are a same preset vector operation unit.

It should be noted that FIG. 8 and FIG. 9 only show an optional target vector operation array and the corresponding target operation data path for the softmax operator and the layernorm operator, respectively. In practical applications, the target vector operation arrays and the target operation data paths respectively corresponding to the softmax operator and the layernorm operator may also be in other optional modes (candidate modes), which are not limited to the candidate modes shown in FIG. 8 and FIG. 9. For example, for the layernorm operator, a product of $\frac{x_i - E(X)}{\sqrt{Var(X) + \epsilon}}$ and $\gamma$ may be calculated first, and then a sum of $\frac{x_i - E(X)}{\sqrt{Var(X) + \epsilon}} * \gamma$ and $\beta$ may be calculated. Thus, a target operation data path different from that in FIG. 9 may be formed. For another example, operation subunits in other preset vector operation units that can satisfy computational requirements may be combined to form the target vector operation array and the target operation data path.

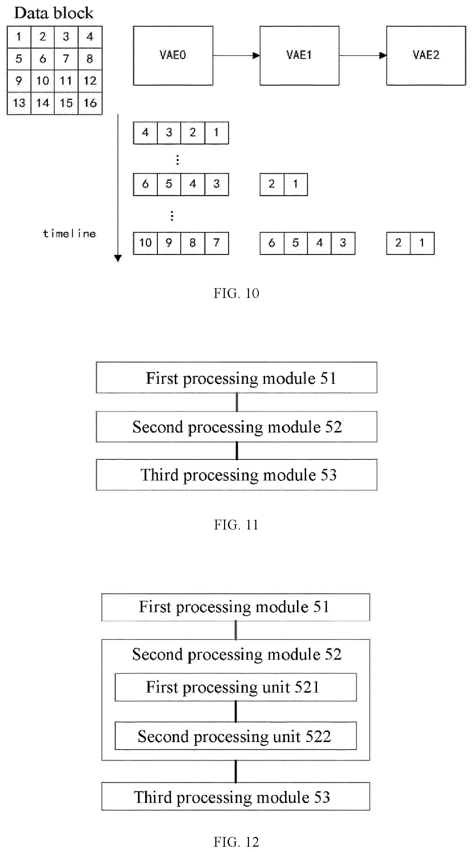

In some optional embodiments, FIG. 10 is a schematic diagram of a computing principle of a pipeline manner according to an exemplary embodiment of this disclosure. As shown in FIG. 10, 1, 2, ..., and 16 in a section of data blocks represent 16 data blocks, each of which is a vector. For example, in a case where feature data for model inference needs to be partitioned into a plurality of vectors, by partitioning the feature data into a plurality of data blocks, a quantity of elements in each data block is consistent with vector dimensions supported by the preset vector operation unit. The preset vector operation unit is represented as a vector accelerator engine (VAE for short). In FIG. 10, that the preset vector operation unit includes three vector accelerator engines, that is, VAE 0, VAE1, and VAE2, is used as an example, wherein timeline represents a timeline. The vector accelerator engines work under drive of a working clock to sequentially input the data blocks 1 to 16 into the VAE 0. After computations of the data block 1 are completed by the VAE 0, a data stream of the data block 1 is input to the VAE1, while the VAE0 continues to perform computations on the data block 2. After the computations of the data block 2 are completed, a data stream of the data block 2 is input to the VAE1, while the VAE0 continues to perform computations on the data block 3. Similarly, after computations of the data stream of the data block 1 are completed by the VAE1, the data stream of the data block 1 is input to the VAE2. By analogy, the VAE0, the VAE1, and the VAE2 may execute data streams of a plurality of data blocks in parallel at a same moment. For example, at a same moment in FIG. 10, the VAE0 performs computations on the data blocks 7, 8, 9, and 10, the VAE1 performs computations on the data blocks 3, 4, 5, and 6, and the VAE2 performs computations on the data blocks 1 and 2. Taking the VAE0 as an example, at a same moment, the VAE0 may perform computations on a plurality of data blocks (taking 4 data blocks as an example in FIG. 10) in parallel in a pipeline manner. It may be learned that the pipeline manner may be set within the preset vector operation units, between the preset vector operation units, or both within and between the preset vector operation units. This is not specifically limited.

In some optional embodiments, a plurality of preset vector operation units may be controlled synchronously through a pre-configured synchronization mechanism, so as to achieve serial pipeline computing.

In some optional embodiments, when only a single simple operator needs to be computed, a plurality of preset vector operation units with computing function of that simple operator may be configured in a same pattern to perform simple operator operations on a plurality of vectors in parallel, thereby improving computational efficiency. The same pattern may refer to that a plurality sets of identical operation subunits form a plurality of identical target operation data paths, and the target operation data paths are controlled through a same control mode to complete computations for a plurality of vectors in parallel.

According to the method in the embodiments of this disclosure, a plurality of heterogeneous preset vector operation units may be freely combined to implement collaborative computing, thereby efficiently completing vector computing tasks. Moreover, the preset vector operation units may be interconnected and data transmission modes may be adopted. For example, transmission may be performed through the preset memory, through connection lines of the preset vector operation units, or through broadcasting between a plurality of preset vector operation units, which helps to reduce memory access bandwidth. In addition, a computation pipeline within the preset vector operation unit and types and computing power of the operation subunits may be configured according to actual computing application requirements. The quantity, the interconnection mode, and the synchronization mechanism of the preset vector operation units may also be configured. Through flexible configuration, vector computing of operation types may be implemented, so as to improve the utilization and the application flexibility of the preset vector operation units. In addition, since each preset vector operation unit may include one or more operation subunits, one or more operation data paths may be supported, so that each operation subunit can participate in one or more operation data paths for operator operations of different operation types, thus achieving reuse of the operation subunits. Moreover, the preset vector operation units may be interconnected to support operator operations of more operation types, so as to effectively expand achievable operation types with fewer preset vector operation units, thereby achieving diversified computing functions.

The foregoing embodiments of this disclosure may be implemented separately or in any combination without conflict. This may be specifically set according to actual requirements, and is not limited in this disclosure.

Any vector data computing method provided in the embodiments of this disclosure may be implemented by any suitable device with a data processing capability, including but not limited to a terminal device and a server. Alternatively, any vector data computing method provided in the embodiments of this disclosure may be implemented by a processor. For example, the processor implements any vector data computing method described in the embodiments of this disclosure by invoking corresponding instructions stored in a memory. Details are not described below.

Exemplary apparatus

FIG. 11 is a schematic diagram of a structure of a vector data computing apparatus according to an exemplary embodiment of this disclosure. The apparatus in this embodiment may be configured to implement the corresponding method embodiments of this disclosure. The apparatus shown in FIG. 11 includes a first processing module 51, a second processing module 52, and a third processing module 53.

The first processing module 51 is configured to determine to-be-computed vector data and a corresponding first operation type.

The second processing module 52 is configured to determine, based on the first operation type, a target vector operation array and a target operation data path corresponding to the target vector operation array from at least one preset vector operation unit, wherein the preset vector operation unit supports one or more operation data paths, and any of the one or more operation data paths corresponds to one computing function.

The third processing module 53 is configured to control the target vector operation array to compute the to-be-computed vector data through the target operation data path, to obtain a computation result corresponding to the to-be-computed vector data.

In some optional embodiments, the first processing unit 51 may be specifically configured to: obtain to-be-computed feature data; determine at least one vector based on the to-be-computed feature data and according to a preset vector dimension; and determine the vector as the to-be-computed vector data.

In some optional embodiments, all preset vector operation units may be coupled to a preset storage to read input vector data from the preset storage and/or output a vector computation result to the preset storage during an operation process.

FIG. 12 is a schematic diagram of a structure of a vector data computing apparatus according to another exemplary embodiment of this disclosure.

In some optional embodiments, on the basis of any one of the foregoing embodiments, as shown in FIG. 12, the second processing module 52 may include a first processing unit 521 and a second processing unit 522.

The first processing unit 521 is configured to determine, based on the first operation type, an operation subunit sequence corresponding to the first operation type.

The second processing unit 522 is configured to determine, based on the operation subunit sequence, the target vector operation array and the target operation data path corresponding to the target vector operation array from preset vector operation units.

In some optional embodiments, the second processing unit 522 may be specifically configured to: determine, based on the operation subunit sequence and an operation data path between operation subunits respectively corresponding to the preset vector operation units, at least one target vector operation unit, first operation data paths respectively corresponding to target vector operation units, and a second operation data path between the target vector operation units; construct the target vector operation array by using the target vector operation units; and determine the target operation data path corresponding to the target vector operation array based on the first operation data paths respectively corresponding to the target vector operation units and the second operation data path between the target vector operation units.

In some optional embodiments, the second processing module 52 may be specifically configured to: determine the target vector operation array and the target operation data path corresponding to the target vector operation array based on the first operation type, and mapping relationships between an operation type and the preset vector operation unit and the operation data path.

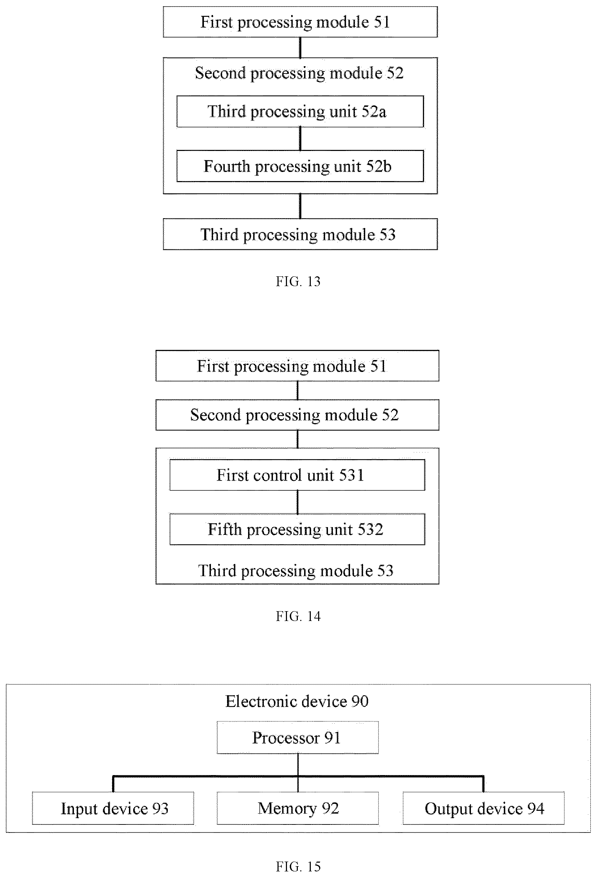

FIG. 13 is a schematic diagram of a structure of a vector data computing apparatus according to still another exemplary embodiment of this disclosure.

In some optional embodiments, as shown in FIG. 13, the second processing module 52 may include a third processing unit 52a and a fourth processing unit 52b.

The third processing unit 52a is configured to determine a first quantity of the target vector operation array based on a quantity of vectors included in the to-be-computed vector data and the first operation type.

The fourth processing unit 52b is configured to determine, based on the first quantity, the first quantity of target vector operation arrays and the target operation data paths respectively corresponding to target vector operation arrays from the preset vector operation units.

FIG. 14 is a schematic diagram of a structure of a vector data computing apparatus according to yet another exemplary embodiment of this disclosure.

In some optional embodiments, as shown in FIG. 14, the third processing module 53 may include a first control unit 531 and a fifth processing unit 532.

The first control unit 531 is configured to control the target vector operation arrays to perform parallel computing on the vectors in the to-be-computed vector data respectively through the target operation data paths, to obtain a respective computation sub-result for the vectors.

The fifth processing unit 532 is configured to determine the computation result corresponding to the to-be-computed vector data based on the computation sub-results respectively corresponding to the vectors.

In some optional embodiments, the third processing module 53 may be specifically configured to: determine a quantity of operation subunits included in the target operation data path of the target vector operation array; and in response to that there are a plurality of operation subunits included in the target operation data path, control the target vector operation array to compute the to-be-computed vector data in a pipeline manner through the target operation data path, to obtain the computation result corresponding to the to-be-computed vector data.

In some optional embodiments, on the basis of any one of the foregoing embodiments, the apparatus in the embodiments of this disclosure may further include at least one preset vector operation unit described above.

For beneficial technical effects corresponding to the exemplary embodiments of this apparatus, reference may be made to the corresponding beneficial technical effects in the section of exemplary method described above, and details are not described herein again.

An embodiment of this disclosure further provides a vector processor. Referring to FIG. 1, the vector processor may include the vector data computing apparatus and the at least one preset vector operation unit according to any one of the foregoing embodiments.

In some optional embodiments, the preset vector operation unit may support one or more operation data paths, and any of the one or more operation data paths corresponds to one computing function.

In some optional embodiments, referring to FIG. 7, all preset vector operation units may be coupled to a preset storage to read input vector data from the preset storage and/or output a vector computation result to the preset storage during an operation process.

In some optional embodiments, referring to FIG. 7, an operation data path is formed between any two preset vector operation units, so as to achieve interconnection between the reset vector operation units.

Compared to a conventional vector accelerator engine in related technologies, the vector processor in the embodiments of this disclosure greatly improves richness and diversity of computing functions and flexibility of applications. Compared to a GPGPU, the vector processor in the embodiments of this disclosure implements different vector computing functions through operation data paths of different hardware, which helps to improve computational efficiency.

Exemplary electronic device

FIG. 15 is a diagram of a structure of an electronic device according to an embodiment of this disclosure. The electronic device includes at least one processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may execute the one or more program instructions to implement the method according to the embodiments of this disclosure that are described above and/or other desired functions.

In an example, the electronic device 90 may further include an input device 93 and an output device 94. These components are connected to each other through a bus system and/or another form of connection mechanism (not shown).

The input device 93 may further include, for example, a keyboard, a mouse, a touch screen, a microphone, and sensors. The sensors may include a pressure sensor, an air quality sensor, a temperature sensor, and the like. The pressure sensor may be used to detect seat pressure. The temperature sensor may be used to detect temperature inside a vehicle cockpit. The air quality sensor may be used to detect air quality inside the vehicle cockpit.

The output device 94 may output information to the outside, and may include, for example, a display, a speaker, a printer, a communication network, and a remote output device connected to the communication network.

Certainly, for simplicity, FIG. 15 shows only some of components in the electronic device 90 that are related to this disclosure, and components such as a bus and an input/output interface are omitted. In addition, according to specific application situations, the electronic device 90 may further include any other appropriate components.

Exemplary computer program product and computer readable storage medium

In addition to the foregoing method and device, embodiments of this disclosure may also provide a computer program product, which includes computer program instructions. When the computer program instructions are executed by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1.  A vector data computing method, **characterized in that** the vector data computing method comprises:

    determining (201) to-be-computed vector data and a corresponding first operation type;
    determining (202), based on the first operation type, a target vector operation array and a target operation data path corresponding to the target vector operation array from at least one preset vector operation unit, wherein the preset vector operation unit supports one or more operation data paths, and any of the one or more operation data paths corresponds to one computing function; and
    controlling (203) the target vector operation array to compute the to-be-computed vector data through the target operation data path, to obtain a computation result corresponding to the to-be-computed vector data.

2.  The method according to claim 1, wherein the determining (202), based on the first operation type, a target vector operation array and a target operation data path corresponding to the target vector operation array from at least one preset vector operation unit comprises:

    determining (2021), based on the first operation type, an operation subunit sequence corresponding to the first operation type; and
    determining (2022), based on the operation subunit sequence, the target vector operation array and the target operation data path corresponding to the target vector operation array from the preset vector operation units.

3. The method according to claim 2, wherein the determining (2022), based on the operation subunit sequence, the target vector operation array and the target operation data path corresponding to the target vector operation array from the preset vector operation units comprises:

       determining (20221), based on the operation subunit sequence and an operation data path between operation subunits respectively corresponding to the preset vector operation units, at least one target vector operation unit, first operation data paths respectively corresponding to the target vector operation units, and a second operation data path between the target vector operation units;
       constructing (20222) the target vector operation array by using the target vector operation units; and
       determining (20223) the target operation data path corresponding to the target vector operation array based on the first operation data paths respectively corresponding to the target vector operation units and the second operation data path between the target vector operation units.

4. The method according to claim 1, wherein the determining (202), based on the first operation type, a target vector operation array and a target operation data path corresponding to the target vector operation array from at least one preset vector operation unit comprises:
       determining the target vector operation array and the target operation data path corresponding to the target vector operation array based on the first operation type, and mapping relationships between an operation type and the preset vector operation unit and the operation data path.

5. The method according to any one of claims of 1 to 4, wherein the determining (202), based on the first operation type, a target vector operation array and a target operation data path corresponding to the target vector operation array from at least one preset vector operation unit comprises:

       determining (202a) a first quantity of the target vector operation array based on a quantity of vectors comprised in the to-be-computed vector data and the first operation type; and
       determining (202b), based on the first quantity, the first quantity of target vector operation arrays and the target operation data paths respectively corresponding to target vector operation arrays from the preset vector operation units.

6. The method according to claim 5, wherein the controlling (203) the target vector operation array to compute the to-be-computed vector data through the target operation data path, to obtain a computation result corresponding to the to-be-computed vector data comprises:

       controlling (2031) the target vector operation arrays to perform parallel computing on the vectors in the to-be-computed vector data respectively through the target operation data paths, to obtain computation sub-results respectively corresponding to the vectors; and
       determining (2032) the computation result corresponding to the to-be-computed vector data based on the computation sub-results respectively corresponding to the vectors.

7. The method according to any one of claims of 1 to 4, wherein the controlling (203) the target vector operation array to compute the to-be-computed vector data through the target operation data path, to obtain a computation result corresponding to the to-be-computed vector data comprises:

       determining a quantity of operation subunits comprised in the target operation data path of the target vector operation array; and
       in response to that there are a plurality of operation subunits comprised in the target operation data path, controlling the target vector operation array to compute the to-be-computed vector data in a pipeline manner through the target operation data path, to obtain the computation result corresponding to the to-be-computed vector data.

8. The method according to any one of claims of 1 to 7, wherein the determining to-be-computed vector data comprises:

       obtaining to-be-computed feature data;
       determining at least one vector based on the to-be-computed feature data and according to a preset vector dimension; and
       determining the vector as the to-be-computed vector data.

9. The method according to any one of claims of 1 to 7, wherein each of the preset vector operation units is coupled to a preset storage to read input vector data from the preset storage and/or output a vector computation result to the preset storage during an operation process.

10. A vector data computing apparatus, **characterized in that** the vector data computing apparatus comprises:

a first processing module (51), configured to determine to-be-computed vector data and a corresponding first operation type;
a second processing module (52), configured to determine, based on the first operation type, a target vector operation array and a target operation data path corresponding to the target vector operation array from at least one preset vector operation unit, wherein the preset vector operation unit supports one or more operation data paths, and any of the one or more operation data paths corresponds to one computing function; and
a third processing module (53), configured to control the target vector operation array to compute the to-be-computed vector data through the target operation data path, to obtain a computation result corresponding to the to-be-computed vector data.

11. The vector data computing apparatus according to claim 10, wherein the second processing module (52) comprises:

a first processing unit (521), configured to determine, based on the first operation type, an operation subunit sequence corresponding to the first operation type; and
a second processing unit (522), configured to determine, based on the operation subunit sequence, the target vector operation array and the target operation data path corresponding to the target vector operation array from preset vector operation units.

12. The vector data computing apparatus according to claim 10, wherein the third processing module (53) comprises:

a first control unit (531), configured to control the target vector operation arrays to perform parallel computing on the vectors in the to-be-computed vector data respectively through the target operation data paths, to obtain a respective computation sub-result for the vectors; and
a fifth processing unit (532), configured to determine the computation result corresponding to the to-be-computed vector data based on the computation sub-results respectively corresponding to the vectors.

13. A vector processor, **characterized in that** the vector processor comprises:
the vector data computing apparatus and the at least one preset vector operation unit according to claim 10.

14. A computer readable storage medium, storing a computer program, which, when executed by a processor, causes the processor to implement the method according to any one of claims 1 to 9.

15. An electronic device, **characterized in that** the electronic device comprises:

a processor; and
a memory, configured to store processor-executable instructions, wherein
the processor is configured to read the executable instructions from the memory, and execute the instructions to implement the method according to any one of claims 1 to 9.

Preset vector operation unit 121

| Operation subunit 1211 | ... | Operation subunit 121m |

Vector instruction computing

Vector data computing apparatus 11

Preset vector operation unit 122

| Operation subunit 1221 | ... | Operation subunit 122s |

Preset vector operation unit 12n

| Operation subunit 12n1 | ... | Operation subunit 12nt |

FIG. 1

Determining to-be-computed vector data and a corresponding first operation type | 201

Determining, based on the first operation type, a target vector operation array and a target operation data path corresponding to the target vector operation array from at least one preset vector operation unit | 202

Controlling the target vector operation array to compute the to-be-computed vector data through the target operation data path, to obtain a computation result corresponding to the to-be-computed vector data | 203

FIG. 2

Determining to-be-computed vector data and a corresponding first operation type | 201

Determining, based on the first operation type, an operation subunit sequence corresponding to the first operation type | 2021

Determining, based on the operation subunit sequence, a target vector operation array and a target operation data path corresponding to the target vector operation array from preset vector operation units | 2022

Controlling the target vector operation array to compute the to-be-computed vector data through the target operation data path, to obtain a computation result corresponding to the to-be-computed vector data | 203

FIG. 3

Determining to-be-computed vector data and a corresponding first operation type — 201

Determining, based on the first operation type, an operation subunit sequence corresponding to the first operation type — 2021

Determining, based on the operation subunit sequence and an operation data path between operation subunits respectively corresponding to preset vector operation units, at least one target vector operation unit, first operation data paths respectively corresponding to target vector operation units, and a second operation data path between the target vector operation units — 20221

Constructing a target vector operation array by using the target vector operation units — 20222

Determining a target operation data path corresponding to the target vector operation array based on the first operation data paths respectively corresponding to the target vector operation units and the second operation data path between the target vector operation units — 20223

Controlling the target vector operation array to compute the to-be-computed vector data through the target operation data path, to obtain a computation result corresponding to the to-be-computed vector data — 203

FIG. 4

Determining to-be-computed vector data and a corresponding first operation type — 201

Determining a first quantity of a target vector operation array based on a quantity of vectors included in the to-be-computed vector data and the first operation type — 202a

Determining, based on the first quantity, the first quantity of target vector operation arrays and target operation data paths respectively corresponding to target vector operation arrays from the preset vector operation units — 202b

Controlling the target vector operation array to compute the to-be-computed vector data through the target operation data path, to obtain a computation result corresponding to the to-be-computed vector data — 203

FIG. 5

| Determining to-be-computed vector data and a corresponding first operation type | 201 |

| Determining, based on the first operation type, a target vector operation array and a target operation data path corresponding to the target vector operation array from at least one preset vector operation unit | 202 |

| Controlling the target vector operation arrays to perform parallel computing on the vectors in the to-be-computed vector data respectively through the target operation data paths, to obtain computation sub-results respectively corresponding to the vectors | 2031 |

| Determining a computation result corresponding to the to-be-computed vector data based on the computation sub-results respectively corresponding to each vector | 2032 |

FIG. 6

FIG. 7

FIG. 8

FIG. 9

Data block

| 1 | 2 | 3 | 4 |
|---|---|---|---|
| 5 | 6 | 7 | 8 |
| 9 | 10 | 11 | 12 |
| 13 | 14 | 15 | 16 |

VAE0 → VAE1 → VAE2

| 4 | 3 | 2 | 1 |

⋮

| 6 | 5 | 4 | 3 |   | 2 | 1 |

⋮

timeline

| 10 | 9 | 8 | 7 |   | 6 | 5 | 4 | 3 |   | 2 | 1 |

FIG. 10

| First processing module 51 |
|---|
| Second processing module 52 |
| Third processing module 53 |

FIG. 11

| First processing module 51 |
|---|
| Second processing module 52 |
| First processing unit 521 |
| Second processing unit 522 |
| Third processing module 53 |

FIG. 12

First processing module 51

Second processing module 52

Third processing unit 52a

Fourth processing unit 52b

Third processing module 53

FIG. 13

First processing module 51

Second processing module 52

First control unit 531

Fifth processing unit 532

Third processing module 53

FIG. 14

Electronic device 90

Processor 91

Input device 93

Memory 92

Output device 94

FIG. 15